# EUROPEAN PATENT APPLICATION

(11) **EP 2 068 589 A1**
(43) Date of publication of application: **10.06.2009**
(21) Application number: 07023497.6
(22) Date of filing: 04.12.2007
(51) Int. Cl.: H04W 4/00

(54) **Method and device for preparing and /or processing a handover of a network element and communication system comprising such device**

(71) Applicant: Nokia Siemens Networks Oy, 02610 Espoo (FI)
(72) Inventor: Pöyhönen, Petteri, 00500 Helsinki (FI); Strandberg, Ove, 02520 Lappböle (FI); Tuononen, Janne, 00510 Nummela (FI)
(74) Representative: Bruglachner, Thomas E.

(57) **Abstract**

A method and a device for preparing and/or processing a handover of a network element, in particular a mobile node, from a first radio access network to a second radio access network are provided, wherein (a) the first radio access network and the second radio access network are of different radio access technologies; (b) the first radio access network provides at least one handover preparation message to at least the second radio access network; (c) the second radio access network processes the handover preparation message and provides a handover preparation response to the first radio access network; and (d) the first radio access network or the network element selects the second radio access network for handover.

## Description

The invention relates to a method and to a device for preparing and/or processing a handover of a network element and to a communication system comprising such a device.

A Worldwide Interoperability for Microwave Access (WiMAX) is known (see, e.g., [1]) as a telecommunications technology aimed at providing wireless data over long distances in a variety of ways, from point-to-point links to full mobile cellular type access. It is based on the IEEE 802.16 standard, which is also called WirelessMAN. WiMAX allows a user, for example, to browse the Internet on a laptop computer without physically connecting the laptop to a router, hub or switch via an Ethernet cable.

Further radio access technologies are known and broadly utilized, e.g., Wireless LAN (WLAN), 2G, 2.5G and 3G technologies, etc.

In current wireless architectures, handovers of mobile nodes between different Radio Access Technologies (also referred to as "inter-RAT handovers") are not supported. This is detrimental from the network perspective (different RATs are handled separately) as well as from a customer's point of view (using terminals that are capable of multi-RAT still is inconvenient and requires burdensome interaction like manual configuration procedures).

Hence, there is no such thing available as a generic solutions for inter-RAT handovers.

The problem to be solved is to overcome the disadvantages set forth above and in particular to provide a solution to efficiently allow handover between different Radio Access Technologies (RATs) thereby "bringing different networks together" and allowing continuous services to be supplied to the user with minimized connection and/or service interrupts.

This problem is solved according to the features of the independent claims. Further embodiments result from the depending claims.

In order to overcome this problem, a method for preparing and/or processing a handover of a network element, in particular a mobile node, from a first radio access network to a second radio access network is provided,
(a) wherein said handover is an inter-access network handover;
(b) wherein the first radio access network provides at least one handover preparation message to at least the second radio access network;
(c) wherein the second radio access network processes the handover preparation message and provides a handover preparation response to the first radio access network;
(d) wherein the first radio access network or the network element selects the second radio access network for handover;
(e) wherein at least one Inter-RAT Handover Control function is associated with the first radio access network and/or the second radio access network.

Different radio access technologies (RATs) may, e.g., be 2G, 2.5G, 3G, WLAN, WiMAX or the like.

This approach advantageously allows introducing a pre-state for a mobile node prior to the mobile node detaching from its current serving base station to be handed over to a new serving base station.

It is to be noted that the handover relates to an inter-AN (access network) handover in contrast to an intra-AN handover.

According to an embodiment, the first radio access network and the second radio access network are of different radio access technologies.

As an alternative embodiment, the first radio access network and the second radio access network are of or comprise substantially the same radio access technology.

Hence, the radio access technologies may be substantially the same although the mechanisms of an inter-AN handover could be applied.

Pursuant to a further embodiment, the at least one Inter-RAT Handover Control function comprises an additional handover functionality that allows to hide access networks boundaries from a handover framework.

Hence, the Inter-RAT Handover Control function enables handover across access boundaries that may be based on different or the same radio access technology/ies.

It is a further embodiment that the handover framework is extended by the Inter-RAT Handover Control function.

Thus, a handover may be processed in a larger environment, in particular across several access networks that are of different or the same technology/ies or operated by one or several network operator(s) or provider(s).

It is yet an embodiment that the first radio access network and the second radio access network are operated by different operators and/or network provider. Alternatively, the first radio access network and the second radio access network may be operated by one operator and/or network provider.

In an embodiment, the first radio access network or the network element initiates the handover.

Hence, the handover may be driven by the network or by the network element (mobile node).

In another embodiment, the first radio access network and the second radio access network each comprises at least one access point. The network element may be handed over from an access point of the first radio access network to an access point of the second radio access network.

The respective access point is in particular associated with the RAT of the respective radio access network (RAN).

In a further embodiment, at least one Inter-RAT Handover Control function (IRHCF) is associated with the first radio access network and/or with the second radio access network.

This Inter-RAT Handover Control function may be deployed as a separate layer to the actual radio access networks, wherein in particular each radio access network may be associated with (a portion) of an Inter-RAT Handover Control function.

In a next embodiment, one Inter-RAT Handover Control administers at least one radio access technology, in particular several radio access technologies.

Advantageously, the IRHCF may administer and/or be associated with more than one radio access technology and/or radio access network.

It is also an embodiment that handover preparation messages are provided to several radio access networks.

Advantageously, the several handover preparation messages are conveyed to more than one radio access networks, in particular to at least one access points within the respective radio access network, within reach for the network element. Upon receipt of responses from the addressees, the network element (or the network) may decide which one to choose to be the destination of the handover.

Pursuant to another embodiment, the several radio access networks are of different radio access technologies.

In particular, at least a portion of the several radio access networks is of different radio access technologies.

According to an embodiment, several handover preparation responses are obtained by the first radio access network from the several radio access networks.

According to another embodiment, the first radio access network or the network element selects the second radio access network from the several radio access networks that provided said handover preparation responses.

In yet another embodiment, the first radio access network adopts an IRHCF serving role (also referred to as "Serving-IRHCF") thereby providing at least one handover preparation message.

According to a next embodiment, the at least one second radio access network adopts an IRHCF relay role (also referred to as "Relay-IRHCF")thereby processing the handover preparation message and providing the handover preparation response.

Pursuant to yet an embodiment, in step (d) the first radio access network provides the at least one handover preparation response to the network element and the network element decides which radio access network to be selected as a destination for handover.

According to a further embodiment, the first radio access network processes a pre-selection of potential radio access networks for handover.

Hence, even if the network element, in particular the mobile node, decides which radio access network (and/or access point within said radio access network) to choose, the network element may apply in particular a filter or a rule and hence pre-select candidates to be chosen by the network element.

It is a further embodiment that the network element is a mobile network element, in particular a mobile node.

Such network element in particular may be or it may be associated with a device comprising a mobility function or a functionality of a mobile node. Such a device may be, e.g., a PDA, a computer, a mobile phone or the like.

According to just a further embodiment radio access networks of different radio access technologies have a trusted relationship with one another.

Pursuant to such trusted relationship, the radio access networks may exchange information with one another thereby knowing that the information may be in particular authenticated and/or confidential.

The trusted relationship may comprise authentication of the radio access networks, in particular of the elements or entities of the radio access networks and/or services to provide secure communication (to some extent).

Yet it is an embodiment that each radio access network that is subject to inter-RAT handover comprises an Inter-RAT Handover Control function (IRHCF). In particular, the network element may detect and/or locate the Inter-RAT Handover Control function of its current radio access technology via a DHCP framework.

It is also an embodiment that the handover is initiated by the network element or by the first radio access network.

The problem stated above is also solved by a device for data processing in particular to prepare and/or initiate a handover said device comprising a processor unit that is equipped and/or arranged such that the method as described herein is executable on said processor unit.

According to an embodiment, the device is a communication device, in particular an element comprising or being associated with an Inter-RAT Handover Control function.

According to a further embodiment, said device is or is associated with an RNC, an SGSN or a GGSN.

The problem stated supra is further solved by a communication system comprising the device as described herein.

Embodiments of the invention are shown and illustrated in the following figures:
- Fig.1: shows a network structure comprising an embodiment as how Inter-RAT Handover Control Functions may be utilized;
- Fig.2: shows a message sequence chart depicting communication flows pursuant to the example provided with Fig.1.

The approach provided herewith in particular enables handovers between various radio access technologies (RATs). This is preferably achieved without modifying any RAT-specific handover functionalities in the access network. Hence, the approach advantageously allows to be transparent to the existing handover mechanism within a particular RAT.

This objective is in particular achieved by providing and/or implementing an "Inter-RAT Handover Control Function", also referred to as "IRHCF".

One particular embodiment is directed to utilizing a low latency handover logic to cover inter-RAT environments by introducing IRHCF to the RATs affected. Hence, IRHCF may provide communication between different RATs and it may trigger and/or execute RAT-specific functions within its serving RAT during inter-RAT handover.

It is to be noted that a network element that is handed over from one RAT to another RAT may in particular be a mobile node, e.g., a mobile terminal, a device comprising a mobile terminal, a PDA, a computer or the like. In general, such network element is referred to also as mobile node "MN".

It is further to be noted that the term RAT also refers to the underlying network using said RAT, i.e. to the Radio Access Network (RAN). Each RAN may have a particular RAT, wherein several Access Points (AP) can be used to access the RAN (or this RAT of the RAN).

The concept provided in particular supports the following prerequisites:
- Preferably, each RAT that is subject to inter-RAT handover supports IRHCF and hence IRHCF is implemented or associated with said RAT.
- IRHCF of each RAT comprises means providing secure and/or encrypted communication with at least one of the other RATs. Hence, a trusted relationship and/or security association between IRHCFs of different RATS is either pre-established or it may be set up on the way.
- The MN comprises means for locating the IRHCF of its current RAT, e.g., by utilization of a DHCP (v4/v6) framework.
- The MN may in particular be connected to a particular RAT.

### Inter-RAT Handover Control Function (IRHCF)

Hereinafter, the IRHCF is illustrated by showing in particular generic steps of the inter-RAT handover.
(1) The MN may gather information from available APs, e.g., via radio beacon scanning. As an alternative or in addition, a particular network (RAN) may provide a list of APs that may in particular be based on the MN's current position and/or location.
(2) If the MN during scanning receives information from an AP of a different RAT (than the RAT the MN is currently connected to) and if the MN decides to prepare a inter-RAT handover to this AP, the MN will contact the IRHCF of the RAT it is currently connected to and it provides handover preparation information for the (for any) available candidate AP/RAT to the IRHCF. However, if there are only APs of the current RAT available, the MN can initiate a standard handover procedure within the RAT (i.e., without changing the RAT).
(3) The IRHCF received the handover preparation information from the MN and adopts a "Serving"-role. Hence, this Serving-IRHCF acts as the MN during the inter-RAT handover procedure. The Serving-IRHCF parses and/or forwards RAT-specific handover preparation messages based on the information provided by the MN.
(4) Using an appropriate protocol, the Serving-IRHCF sends handover preparation information to IRHCFs of adjacent RATs.
(5) If at least one AP that is in the Serving-IRHCF's sphere of responsibility is included in the handover preparation information, the Serving-IRHCF enables RAT-specific handover preparation and also adopts a Relay-IRHCF role.
(6) Each IRHCF receiving the handover preparation information from the Serving-IRHCF adopts a "Relay"-role.
   The Relay-IRHCF is responsible for executing handover preparation in its RAT. Depending on the RAT functionalities required this may vary. In some wireless architectures, the Relay-IRHCF may act as a MN and in other wireless architectures, the Relay-IRHCF may act as the MN's current AP.
(7) When a processing of RAT-specific functions at the Relay-IRHCF has ended, the Relay-IRHCF reports the outcome to the Serving-IRHCF.
(8) The Serving-IRHCF collects all reports from (different) Relay-IRHCF(s) and provides those reports to the MN.
   Depending on the handover algorithm to be utilized, the Serving-IRHCF may pre-select at least one RAT/AP candidate that may be subject to a handover.
(9) Based on the information received, the MN may decide which RAT/AP to choose for handover (if there are any alternatives provide to choose between) and the MN informs the Serving-IRHCF about its decision.
(10) The Serving-IRHCF further informs the Relay-IRHCF that manages the AP that has been chosen by the MN.
(11) As an option (in particular if required by the RAT-specific handover mechanism), the Relay-IRHCF conveys the decision of the MN to the selected AP.
(12) After the MN has made the decision which AP/RAT to choose, the MN may initiate a handover execution function.
   In case said handover requires a context transfer or any other function that may in particular need any communication between the previous RAT and the next RAT, the respective IRHCF may provide such communication.
   Otherwise, the IRHCFs release their state relating to the MN.

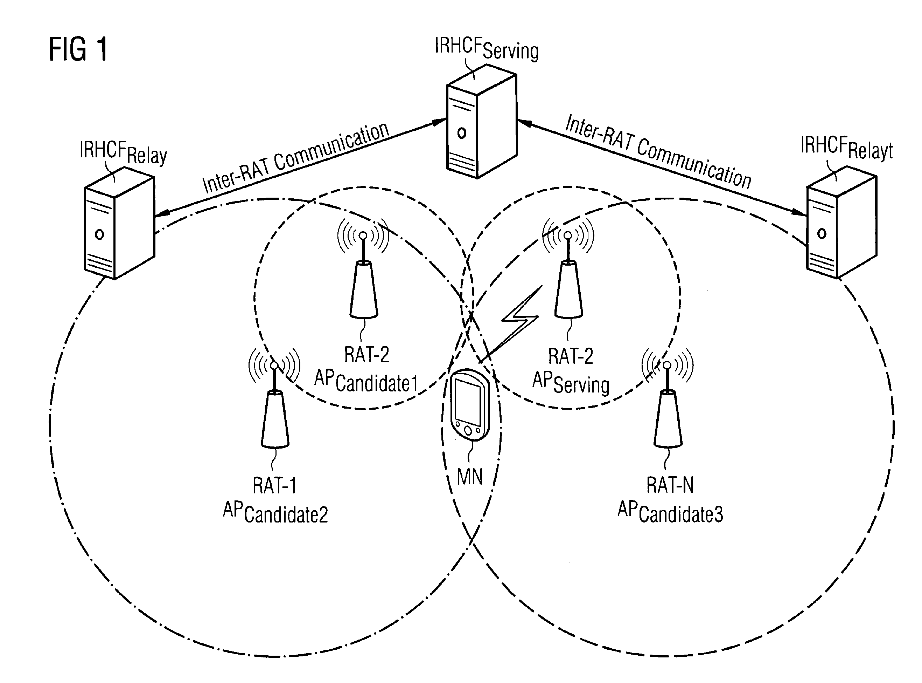

**Fig.1** shows a network structure comprising an embodiment as how Inter-RAT Handover Control Functions may be utilized.

A multi-RAT enabled mobile node MN is moving within an area that has coverage of three different RATs, i.e., RAT-1, RAT-2 and RAT-N. All RATs support IRHCF.

For example, a terminal initiated handover algorithm is used, i.e., the mobile node MN sets up a list of potential access point AP candidates to choose from for initiating and/or executing a handover. Furthermore, the mobile node MN may finally select an access point AP for handover after handover preparation will be finalized.

Hence, regarding Fig.1, in particular the following steps may be conducted:
(1) The mobile node MN starts to leave the coverage area of its current serving access point AP_{Serving}, which belongs to the RAN employing RAT-2.
   Therefore, the MN starts scanning for available RATs and APs in particular based on its local scanning policy.
(2) After said scanning is completed, the MN has become aware of access points AP_{Candidate1}, AP_{Candidate2} and AP_{Candidate3}, each of which being associated with a different RAT:
   - AP_{Candidate1} is associated with PAT-1;
   - AP_{Candidate2} is associated with RAT-2; and
   - AP_{Candidate3} is associated with RAT-N;
   Based on radio beacons received by the mobile node MN, the mobile node MN may be able to determine to which RAT each AP found is associated with.
(3) A preparation of the handover that may in particular be provided by a handover preparation function within or associated with the mobile node MN decides to add the access points AP_{Candidate1}, AP_{Candidate2} and AP_{Candidate3} to its list of access point candidates.
(4) As, according to the example provided herewith, the mobile node MN does not limit the list of potential access point candidates for handover to RAT-2, the mobile node MN conveys this list of access point candidates together with related handover information to an IRHCF of RAT-2 thereby utilizing a "Inter-RAT HO Request message".
   If the list of access point candidates contained only access point(s) of RAT-2, the mobile node MN would have triggered RAT-2 specific intra-RAT handover procedure without any need to contact the IRHCF.
(5) The IRHCF in RAT-2 receives the "Inter-RAT HO Request message" and may thereinafter preferably assure the identity of the mobile node MN and adopt a role of a Serving-IRHCF for this mobile node MN.
(6) Subsequently, the Serving-IRHCF generates an "Inter-RAT HO Preparation message" for each RAT type containing RAT-specific handover preparation information, e.g., an access point information from the "Inter-RAT HO Request message" and optionally, a security context of the mobile node MN.
(7) As trusted relationships may be provided for the IRHCFs, they can securely communicate with each other. The Serving-IRHCF sends the "Inter-RAT HO Preparation message" to each IRHCF of RAT-1 and RAT-N.
   It is to be noted that the Serving-IRHCF may also activate RAT-2 specific handover preparation, because of the existence of access point AP_{Candidate1}. Hence, the IRHCF can have (simultaneously) both, a serving and a relay role.
(8) Receipt of the "Inter-RAT HO Preparation message" results in adopting of a "Relay"-role for the IRHCF. Such Relay-IRHCF may then trigger a RAT-specific handover preparation function. Hence, each Relay-IRHCF may act as a representative of the mobile node MN in its RAN during said Inter-RAT handover procedure.
   Depending on the individual RAT system, acting as a "representative of the mobile node MN" may comprise different functionalities and roles provided by the Relay-IRHCF.
(9) Each access point AP_{Candidate1}, AP_{Candidate2} and AP_{Candidate3} in each RAT may process RAT-specific handover preparation functions and then respond to its Relay-IRHCF with a RAT-specific respond message.
(10) The Relay-IRHCFs forward the responses of the access points AP_{Candidate1}, AP_{Candidate2} and AP_{Candidate3} to the Serving-IRHCF or alternatively they may transform it to a format used between the IRHCFs.
(11) The Serving-IRHCF compiles the responses provided by the Relay-IRHCFs to one "Inter-RAT HO Response message", which contains a list of APs that are willing to accept a new connection and hence may be subject to a handover from the mobile node MN.
(12) The mobile node MN receives the "Inter-RAT HO Response message" from the Serving-IRHCF and decides which access point to choose.
   In this example, the mobile node MN chooses the access point AP_{Candidate3} associated with RAT-N and notifies the Serving-IRHCF about the decision with an "Inter-RAT HO Indication message".
(13) The Serving-IRHCF receives the "Inter-RAT HO Indication message" and forwards an "Inter-RAT HO Confirm message" to the Relay-IRHCF in RAT-N.
(14) In this example, RAT-N is a WIMAX access network. The Relay-IRHCF confirms the handover preparation for the access point AP_{Candidate3} indicating that handover is imminent and establishes a pre-state for the mobile node MN to be kept up for an extended period of time (it may, e.g., still be possible that handover never happens).
(15) After having sent the "Inter-RAT HO Indication message" the mobile node MN starts the actual RAT specific handover execution procedure. For example, such handover execution procedure may begin with detaching a radio connection from the current serving access point.

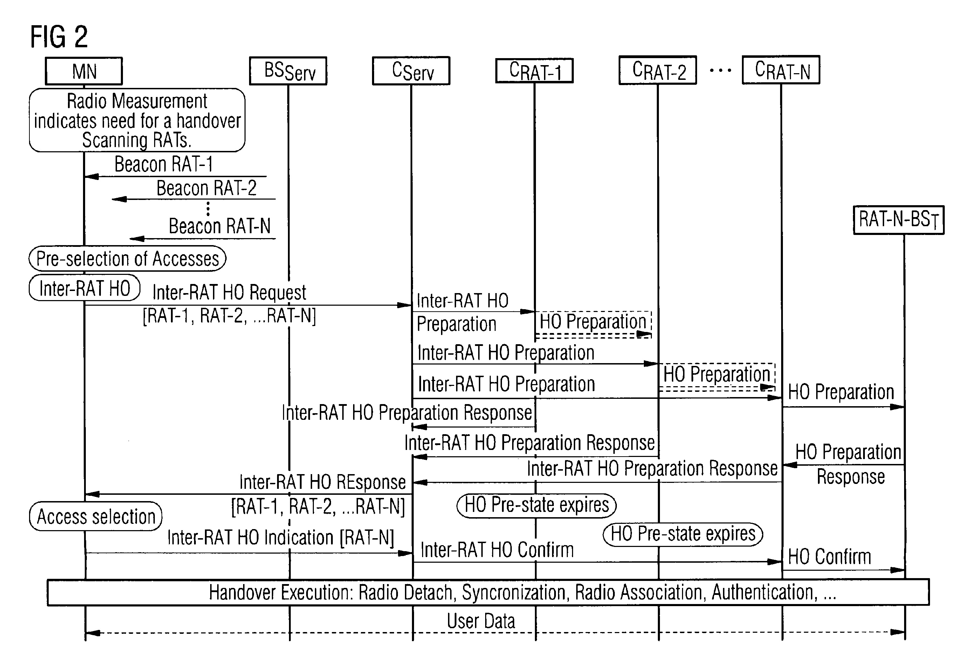

A message sequence chart in depicted in **Fig.2** and illustrates the example as described above.

This example shows and describes a terminal initiated handover procedure. However, the handover procedure may as well be initiated by the network. One difference to such network initiated handover procedure is that instead of providing the list of access point candidates to the Serving-IRHCF, the mobile node MN may provide measurement reports to the Serving-IRHCF, which then generates said list of access point candidates by itself. In the scenario of the network initiated handover, the Serving-IRHCF may discard access points from the access point candidates list.

Advantageously, the approach provided is applicable for processing handovers via network borders of operators or network providers, e.g., if a serving RAT and a target RAT are managed by different operators or network providers.

### Serving-IRHCF identifier/locator

There may be several approaches as how a mobile node MN may obtain an identifier or locator of the Serving-IRHCF and hence be able to locate its Serving-IRHCF.

Depending on the addressing and naming scheme used in the respective RAT, in particular the following options could be utilized:
- The IRHCF identifier or locator is configured to or associated with the "beacon" information which is typically broadcasted by the access points of a particular RAT (e.g., 2G, 3G and/or WIMAX).
- The IRHCF identifier or locator may be a domain-specific name that is well-known and thus be obtainable by the mobile node MN. In this case, the domain-specific name can be locally resolved within each network.
- The IRHCF identifier or locator may be a well-known address of a certain address space and therefore be obtainable by the mobile node MN.

It is to be noted that in case said radio beacon or system information according to 3GGP terms carries IRHCF information, this can be used to make a pre-selection to which RAT the mobile node MN will connect in the first place.

### Secure Inter-IRHCF Communication

IRHCFs may be arranged such that they (in particular logically) deploy an overlay network utilizing cryptographic identifiers as node identifiers. An example of such a solution is a HIP based NodeID architecture developed in the "Ambient Networks EU project".

### Further implementations and advantages

Advantageously, each radio access network that shall be subject to inter-RAT handover may comprise an IRHCF.

However, it is also possible that the IRHCF is associated with and/or located on upper layers of a network topology or that an IRHCF manages several RATs. In particular, such IRHCF shall advantageously be reachable from a mobile node MN and from other IRHCFs.

Preferably, the mobile node MN is connected to a RAT. Before the IRHCF can be used, the mobile node MN may be connected to some RAT that implements and/or provides IRHCF.

There are several alternatives as how the concept provided herein may be implemented. Preferably, a realization can be chosen according to the respective wireless systems and its surroundings.

In particular, the following options for IRHCF implementation may apply:
- The IRHCF can be implemented within or in association with an access point or a base station of the access network.
- The IRHCF may be realized as an extension of an existing wireless core network functionality and/or of an existing network element like an RNC, an SGSN or a GGSN.
- The IRHCF may be realized as a network element, in particular as a separate control node in the access network.

Advantageously, the approach presented provides means for a generic inter-RAT handover mechanism between various RATs.

The solution provided may in particular be easy to implement and feasible, because it does not require new hardware, instead it may be added to an existing control node.

The "virtual mobile node" may be a scalable model as the number of mobile nodes MNs in handover state is limited.

The solution is modular, new RAT types can be added simply by implementing a new or an amended model to the IRHCF.

The approach works with networks of different operators or network providers.

### Abbreviations:

- 3GGP: 3rd Generation Partnership Project
- AP: access point
- AN: access network
- BS: base station
- GPRS: General Packet Radio Service
- GSSN: Gateway GPRS Support Node
- HO: hand over
- IRHCF: Inter-RAT Handover Control Function
- MN: mobile node
- RAN: Radio Access Network
- RAT: Radio Access Technology
- RNC: Radio Network Controller
- SGSN: Serving GPRS Support Node
- WiMAX: Worldwide Interoperability for Microwave Access
- WLAN: Wireless Local Area Network

### Reference(s):

[1] http://en.wikipedia.org/wiki/Wimax

## Claims

1. A method for preparing and/or processing a handover of a network element from a first radio access network to a second radio access network,
(a) wherein said handover is an inter-access network handover;
(b) wherein the first radio access network provides at least one handover preparation message to at least the second radio access network;
(c) wherein the second radio access network processes the handover preparation message and provides a handover preparation response to the first radio access network;
(d) wherein the first radio access network or the network element selects the second radio access network for handover;
(e) wherein at least one Inter-RAT Handover Control function is associated with the first radio access network and/or the second radio access network.

2. The method according to claim 1, wherein the first radio access network and the second radio access network are of different radio access technologies.

3. The method according to claim 1, wherein the first radio access network and the second radio access network comprise substantially the same radio access technology.

4. The method according to any of the preceding claims, wherein the at least one Inter-RAT Handover Control function comprises an additional handover functionality that allows to hide access networks boundaries from a handover framework.

5. The method according to claim 4, wherein the handover framework is extended by the Inter-RAT Handover Control function.

6. The method according to any of the preceding claims, wherein the first radio access network and the second radio access network are operated by different operators and/or network provider.

7. The method according to any of claims 1 to 5, wherein the first radio access network and the second radio access network are operated by one operator and/or network provider.

8. The method according to any of the preceding claims, wherein the first radio access network or the network element initiates the handover.

9. The method according to any of the preceding claims, wherein the first radio access network and the second radio access network each comprises at least one access point.

10. The method according to claim 9, wherein the network element is handed over from an access point of the first radio access network to an access point of the second radio access network.

11. The method according to any of the preceding claims, wherein one Inter-RAT Handover Control function administers at least one radio access technology, in particular several radio access technologies.

12. The method according to any of the preceding claims, wherein handover preparation messages are provided to several radio access networks.

13. The method according to claim 12, wherein the several radio access networks are of different radio access technologies.

14. The method according to any of claims 12 or 13, wherein several handover preparation responses are obtained by the first radio access network from the several radio access networks.

15. The method according to claim 14, wherein the first radio access network or the network element selects the second radio access network from the several radio access networks that provided said handover preparation responses.

16. The method according to any of the preceding claims, wherein the first radio access network adopts an IRHCF serving role thereby providing at least one handover preparation message.

17. The method according to any of the preceding claims, wherein the at least one second radio access network adopts an IRHCF relay role thereby processing the handover preparation message and providing the handover preparation response.

18. The method according to any of the preceding claims, wherein in step (d) the first radio access network provides the at least one handover preparation response to the network element and the network element decides which radio access network to be selected for handover.

19. The method according to claim 18, wherein the first radio access network processes a pre-selection of potential radio access networks for handover.

20. The method according to any of the preceding claims, wherein the network element is a mobile network element, in particular a mobile node.

21. The method according to any of the preceding claims, wherein radio access networks of different radio access technologies have a trusted relationship with one another.

22. The method according to any of the preceding claims, wherein each radio access network that is subject to inter-RAT handover comprises an Inter-RAT Handover Control function.

23. The method according to claim 22, wherein the network element detects and/or locates the Inter-RAT Handover Control function of its current radio access technology via a DHCP framework.

24. The method according to any of the preceding claims, wherein the handover is initiated by the network element or by the first radio access network.

25. A device for preparing and/or processing a handover comprising a processor unit that is arranged such that the method according of any of the preceding claims is executable on said processor unit.

26. The device according to claim 25, wherein said device is a communication device, in particular an element comprising or being associated with an Inter-RAT Handover Control function.

27. The device according to any of claims 25 or 26, wherein said device is or is associated with an RNC, an SGSN or a GGSN.

28. Communication system comprising the device according to any of claims 25 to 27.
